# EUROPEAN PATENT APPLICATION

(11) **EP 3 633 191 A1**
(43) Date of publication of application: **08.04.2020**
(21) Application number: 18020482.8
(22) Date of filing: 03.10.2018
(51) Int. Cl.: F03H 99/00

(54) **REACTIONLESS PROPULSION BASED ON QUANTUM TUNNELING**

(71) Applicant: Markov, Nick, Varna 9000 (BG)
(72) Inventor: Markov, Nick, Varna 9000 (BG)

(57) **Abstract**

A propulsion method, which comprises exposing ammonia molecules in a sealed container to an electric field generated with a 400 kV Tesla coil, wherein the electric field aligns the direction of the pyramidal nitrogen inversion so as to create a directional pressure bias inside the sealed container.

## Description

### Reactionless Propulsion Based on Quantum Tunneling

A new theory [1] supported with experimental evidence show that quantum tunneling can be used to bypass the momentum conservation law in a similar way the tunneling is currently being used for bypassing the energy conservation law (e.g. in tunnel diodes). The following experiment represents an example of reactionless propulsion based on the quantum tunneling process called pyramidal (nitrogen) inversion:
1. A sealed rubber container is filled with ammonia (NH₃) at room temperature.
2. A Tesla coil exposes the ammonia molecules to several hundred kilovolts DC voltage. The distance between the electrodes is sufficient to prevent electrical arc discharges.
3. A hanging by a thin thread sealed box starts spinning and accelerates after performing Step 2 inside of it; see the figure.

The thrust in this experiment is achieved without expelling mass propellent. Two plastic hard cases were used to ensure that the only mechanical interaction with the surrounding environment is via the vertical thin thread acting in perpendicular direction to the horizontal rotational motion. The test box doesn't interact with Earth's magnetic field because there is no DC current involved. The measured magnetic field around the box confirms no significant fluctuations.

The ammonia molecules are electrical dipoles. The DC electric field creates a bias in the directionality of the nitrogen inversion. The bias changes the pressure distribution inside the NH₃ container creating a resultant force. The test setup could be optimized by using a laser to stop the spinning of the molecules [2] before applying the electrical field to align their dipoles; this should increase the bias.

The claimed reactionless propulsion was not discovered in a random way. This experiment was the end result of a test series designed to verify a new definition for inertial mass, and demonstrate a direct practical benefit from the new definition. The underlying theory assumes that the universal expansion involves matter, not just space. The elementary particles are allowed to expand in a stepwise manner. Their sizes can fluctuate vastly relative to each other at very high rates (^{∼}10²⁰ Hz). The mass is redefined as a quantity showing how often a particle is present for interaction. The advantages of such definition are:
1. The conservation laws are still in place, but only on average. Note that these are very stable averages at such high fluctuation rates.
2. Certain outliers can be used in a clever way for bypassing the conservation laws.
3. The new definition also:
   a. can provide a link between the general relativity and the quantum theories [1].
   b. has the potential to resolve the discrepancy in the galactic motions without modifying existing laws or introducing dark matter [1].
   c. provides a more logical explanation for the quantum wave function than the Copenhagen interpretation [1].

### References

[1] N. Markov, Time Dilation in Large Arrays of Bodies, Sep 2016
[2] Chien-Yu Lien, Christopher M Seek, Yen-Wei Lin, Jason H.V. Nguyen, David A. Tabor & Brian C. Odom, Broadband optical cooling of molecular rotors from room temperature to the ground state, Nature Communications, Sep 2014

### Abstract

This article presents correlation between galactic rotational velocities and total time dilation, including gravitational and relative velocity components. The correlation doesn't seem to require any hidden parameters or modification of existing laws.

### Dominating Factors

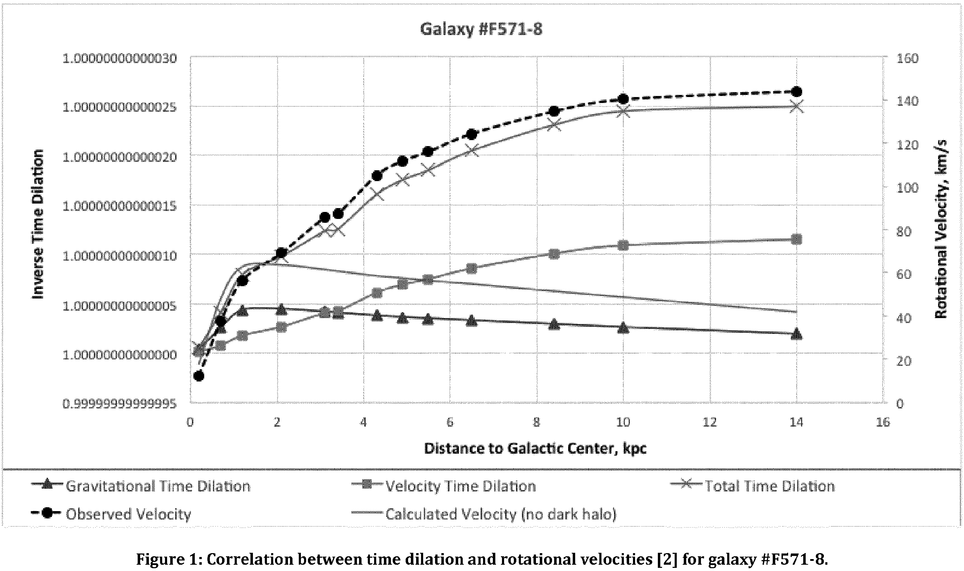

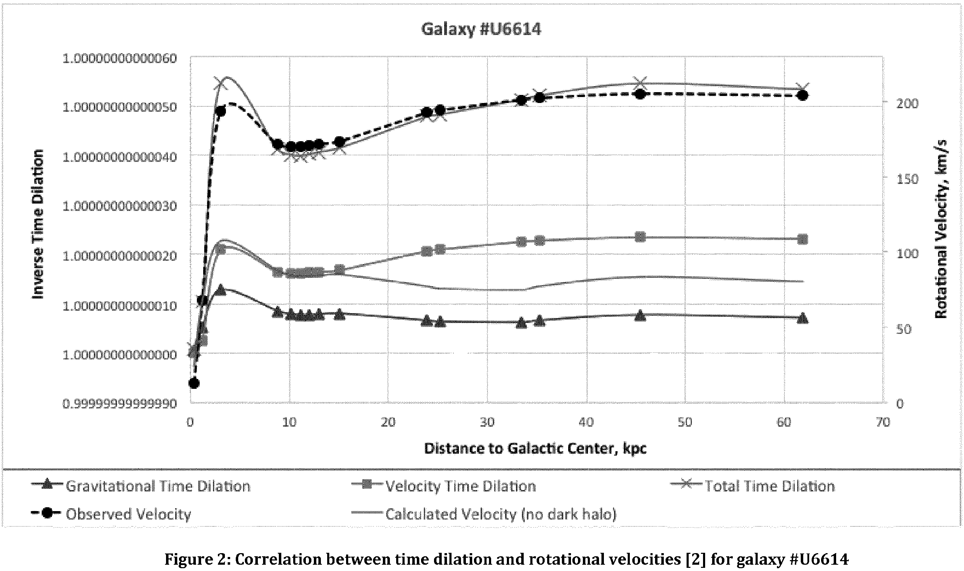

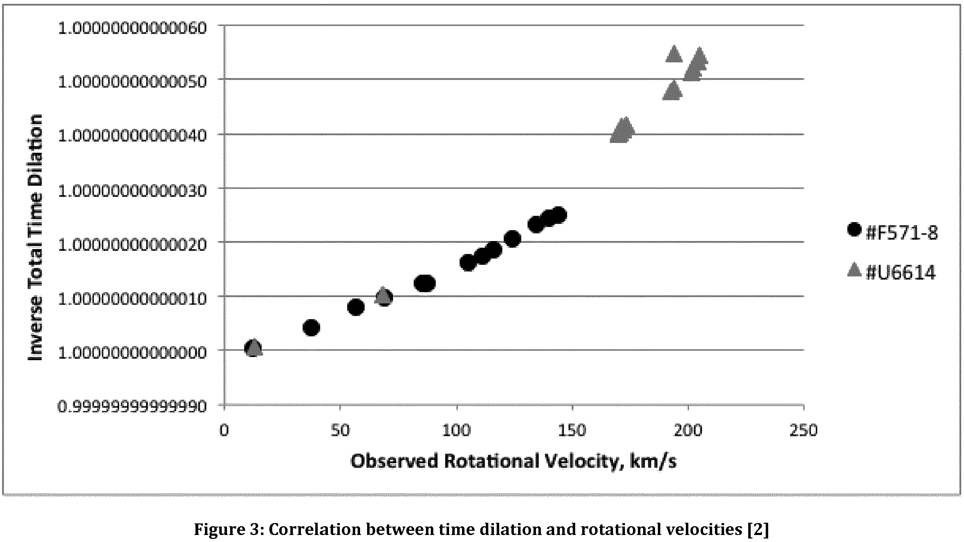

Observations show that the mathematical model used to predict rotational velocities in the solar system cannot be directly applied to describe galactic motions [1]. Plummer-type formulae have been used to derive the motions even though the structure of these systems is very different. The motions in the Solar system are dominated by the influence of a single body on its satellites, while the interaction in the galaxies is many-to-many. The distances and velocities in the two systems are orders of magnitude apart. In result, the internal distribution of time dilation inside a galaxy differs significantly from a solar system. The plot in Figure 1 shows the gravitational component of the dilation is dominant within a 3 kpc radius from the galactic center, while the dilation caused by the relative velocities between the stars and the galactic center [2]) dominates the right side of the plot. Figure 2 shows a similar trend for a more massive galaxy, where the velocity dilation takes over even earlier (at ∼ 2 kpc). Both plots illustrate that the total time dilation due to gravity and relative velocities correlates better with the shape of the rotational curves than each of the two individual components. Distance independent comparison between the two galaxies, is given in Figure 3.

### Delayed Expansion

The reasons behind the urge to seek correlation with the galactic time dilation will be explained in this section. The general theory of relativity gives the relation between gravity and time dilation. As a step further, this article will attempt to show why time dilation due to galactic star velocities should be also considered as a driving component of the galactic gravity.

Let's assume for a moment that the universal expansion can be taken down to the micro level and evaluate some potential benefits. If we let the elementary particles expand with the rest of the universe, the inner particles of a given object would have to push the outer particles outwards in order to expand. The expansion at the outer layers would be delayed because the propagation of the interactions in outward direction cannot exceed the speed of light. The delay would be greater for a more massive object due to the greater number of interactions on the way out. The resulting lag would allow for a lesser mass to expand into the direction of the bigger object, simulating a process perceived as gravitational attraction.

The delayed expansion process resembles an explosion of the inner core that takes time to reach the outer layers of a given mass. A smaller mass would be exploding relatively faster. Pushed by the surrounding universal expansion of space, the smaller explosion would be spreading asymmetrically towards the bigger one, since the bigger one always lags behind. The explosions would be ongoing continuously, with the bigger masses always lagging and making space for the smaller ones to move in.
If the delayed expansion is the cause of gravity, why doesn't the same logic work for large arrays of bodies, such as galaxies? Apparently the assumed delay of the individual expanding components (e.g. stars, gas, etc.) is not sufficient to explain the observed rotational velocities. Thus, comes the quest to find additional delay not caused by mass. The special relativity can provide the means in this case because the star velocities are sufficiently high to dominate the time dilation in the galactic disk. In other words, the stars expand in the direction of the lagging galactic inner mass. In addition, the inner mass expands even slower due to the star velocities relative to the galactic center. This additional delay is equivalent to a stronger gravitational pull.
Following the explosion analogy, the galactic core is lagging and creating space for the "exploding" outer layers to move in. The core is lagging even more due to the relativistic time dilation caused by the star velocities in the outer layers.
We, the observers, are also expanding, so our perspective of perception is based on continuous renormalization of all expanding dimensions.

### Step Expansion

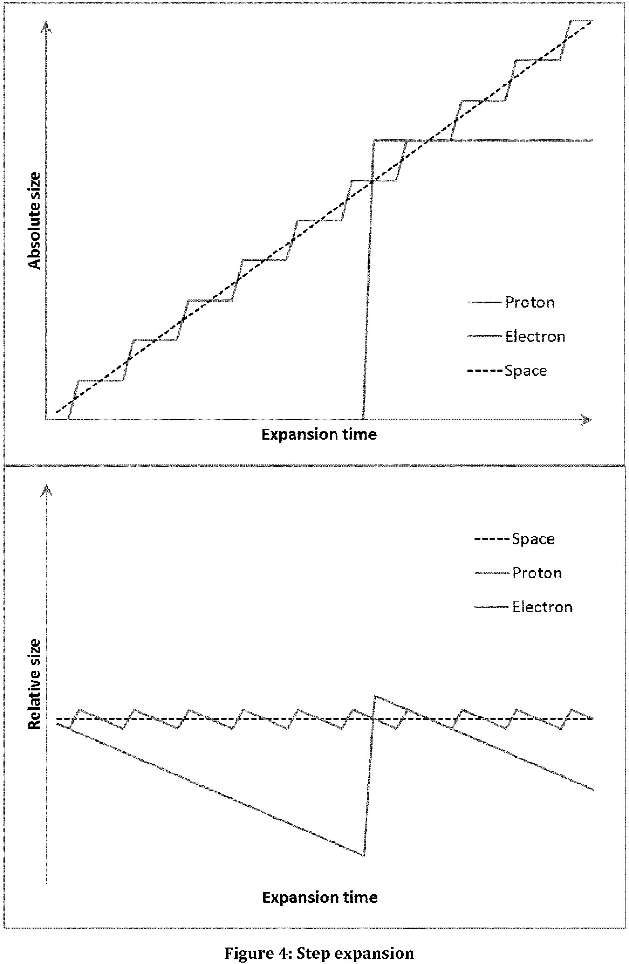

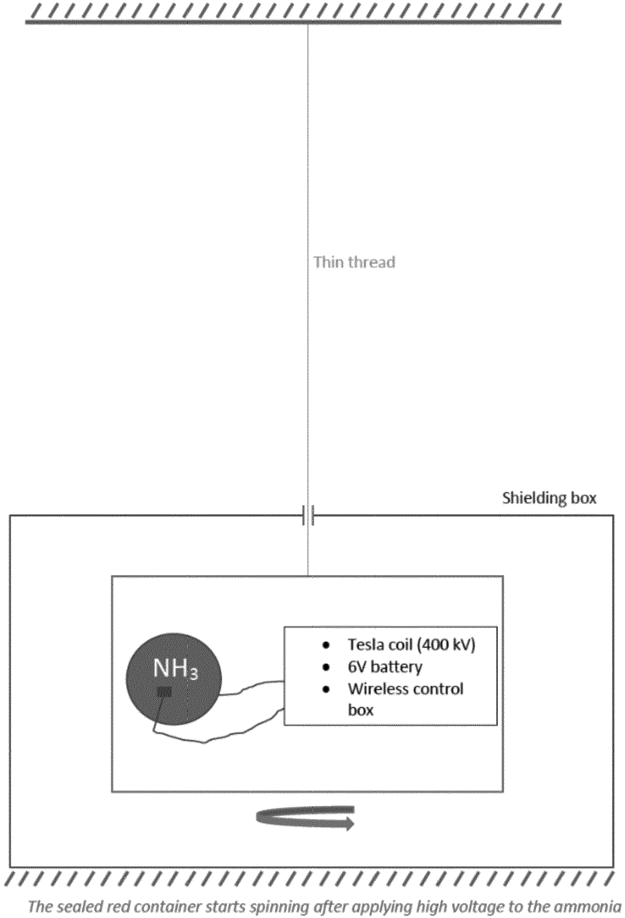

Let's return to the micro level and explore other potential benefits of the expansion model. In order to extract mass and frequency properties from the universal expansion, the elementary particles should be expanding in a stepwise manner that differs from the known continuous expansion of space. For example, a proton must expand (pop) 1836 times for every single electron pop; see Figure 4. Electron's mass and size, in such a model, would be near zero, relative to the proton most of the time. Mass and size would be consistent with the experimental data only as average over time quantities.

Step expansion would make identical particles, which pop in sync, to push away from each other, while the electron and proton would move towards each other due to their out-of-sync existence. In other words, when normalizing size continuously, the proton and electron would be making space for each other's expansion all the time, which can be perceived as attraction. The evidence that something like this is happening can be found everywhere. The uncertainty principle, the wave-particle dualism, and the particle spin would not need to be just mathematical abstractions. For example, while magnetism is associated with change, there has not been found any change associated with the particle spin yet. If particles expand stepwise, their relative sizes would be changing all the time, and one of the manifestations of the relative change would be the observed spin. Another manifestation would be the wave-particle dualism. When an electron passes through a slit, the electron size would be significant relative to the slit size every time it pops. The number of pops, while in the slit, is speed dependent, and so is de Broglie's formula.

A photon can be represented in this model by a moving "void" left by a particle changing its expansion pattern. Pressed by the neighboring expanding particles and space, the void moves similar to the way a buoyant bubble moves towards fluid surface. Particle and anti-particle may be modeled by 180-degree out of phase expansion. The strong nuclear force may be modeled as expanding touching particles with no space (the photon void carrier) in-between, producing instant strong interaction.

In the step expansion model, particles accelerate (asymmetrically expand) towards other particles, which expand out of sync. Particles accelerate mostly when they are relatively big (in their UP phase), while their opposing neighbors are relatively small, between two pops. The weak force may be an exception when a particle interacts while it is relatively small (DOWN phase), because the particle is being squeezed out by its expanding neighbors. Such a particle crosses barriers in a process known as tunneling. The tunnel effect in this model would be explained with the particle's temporary massless state when little squeezing force is needed to accelerate it. After the squeeze, it acts like a supper massive particle, because almost nothing can interact with this particle while it is still small. This would explain missing mass that the Standard model compensates with neutrinos. Following the same logic, a muon could be an electron forced to interact while small.

### Dark Energy

The step expansion model provides opportunities to unify the four major force interactions. Their corresponding energies can be defined as potential energies relative to the universal expansion. In other words, the so-called "dark" energy would actually be primary; all other energies would be its derivatives.

### Dark Matter

The time dilation based on relative velocities should be sufficient to explain the discrepancies found when applying Plummer-type formulae (i.e. gravitational time dilation alone). The delayed expansion model doesn't include dark matter in its framework.

### Big Bang

Time and space can be infinite in all directions, when matter expands with space. There is no need of a starting point.

### Conservation Laws

The step expansion model allows universal realignment at every step; similar to what happens when one shakes a bag of beans. A given particle must make space for other particles to expand into. The process of continuous realignment is described with conservation laws. D'Alembert's paradox can be used to derive the first Newton's law, because constant velocity can be maintained without external energy supply in both cases.

Since the observed mass can be considered an average quantity over time, the conservation laws would also be only valid in an average over time sense. Can this help us find the tunnel effect, a known outlier, on a macro scale? Where can we find a macro squeeze? Can heat spikes occurring during ion implantation be explained with cations squeezing a neighboring anion while small? The step expansion model opens a door to seek outliers, where the laws can be bypassed, and new propulsion methods derived.

### Conclusion

The proposed step expansion model explains the universal expansion on a micro level and the time dilation on a macro level. The known discrepancy in the galactic rotational curves is explained with a time dilation component due to relative velocities between the individual stars and the galactic center of mass. The model does not require introducing hidden parameters such as dark matter or extra dimensions. It does not require modifying existing laws, either. Rather, it attempts to explain why the existing laws are the way they are and how to apply them better.

### References

[1] The Mass Distribution and Rotation Curve in the Galaxy, 'Planets, Stars and Stellar Systems', Springer, Vol. 5, ed. G. Gilmore, Chap. 19
[2] High-resolution rotation curves of low surface brightness galaxies: Data, McGaugh, S.S., Rubin, V.C., & de Blok, W.J.G. 2001, AJ, 122, 2381

## Claims

1. A reactionless propulsion method, which comprises applying a high voltage to gas sealed in a container to electrically align the direction of the pyramidal quantum inversion of the polar gas molecules, which creates directional pressure bias in the container and generates thrust.

2. A method according to claim 1, wherein ammonia in a sealed container is exposed to a strong pulsating electric field generated with a 400kV Tesla coil, which accelerates the container.
